Europäisches Patentamt

European Patent Office

Office européen des brevets

(19)

(11) Numéro de publication : **0 094 292
B1**

(12)

# FASCICULE DE BREVET EUROPÉEN

(45) Date de publication du fascicule du brevet :
**11.02.87**

(21) Numéro de dépôt : **83400865.8**

(22) Date de dépôt : **29.04.83**

(51) Int. Cl.⁴ : **A 23 G   3/30**

(54) **Bonbon "sucre cuit" sans sucre.**

(30) Priorité : **30.04.82 FR 8207586**

(43) Date de publication de la demande :
**16.11.83 Bulletin 83/46**

(45) Mention de la délivrance du brevet :
**11.02.87 Bulletin 87/07**

(84) Etats contractants désignés :
**CH DE GB IT LI NL SE**

(56) Documents cités :
**FR-A- 2 410 962
GB-A- 1 481 738
GB-A- 2 052 946
GB-A- 2 053 651
US-A- 4 238 510
US-A- 4 311 722
US-A- 4 316 915
US-E-    26 959**

(73) Titulaire : **Roquette Frères
F-62136 Lestrem (FR)**

(72) Inventeur : **Boursier, Bernard
63, route d'Estaires Violaines
F-62138 Haisnes (FR)**
Inventeur : **Bussiere, Guy
64, rue de la Lys
F-59253 La Gorgue (FR)**
Inventeur : **Devos, Francis
70, route de Merville La Motte-au-bois Morbecque
F-59190 Hazebrouck (FR)**
Inventeur : **Huchette, Michel
63, rue du Maréchal Joffre
F-59660 Merville (FR)**

(74) Mandataire : **Koch, Gustave et al
Cabinet PLASSERAUD 84, rue d'Amsterdam
F-75009 Paris (FR)**

## Description

L'invention a pour objet un bonbon de « sucre cuit » sans sucre et un procédé permettant de fabriquer ce bonbon.

L'expression « sucre cuit » désigne, dans le domaine de la confiserie, les bonbons durs qui sont bien connus du consommateur et qui se présentent avec une consistance cassante et un aspect vitreux.

Les bonbons « sucre cuit » conventionnels sont traditionnellement constitués par un mélange de saccharose et de sirop de glucose, déshydraté par cuisson éventuellement sous vide. Dans le cas des bonbons du type « sucre cuit » sans sucre et toujours conventionnellement, le mélange de saccharose et de sirop de glucose a été remplacé par des sirops de sorbitol contenant éventuellement du mannitol et, plus récemment, par des hydrolysats d'amidon hydrogénés.

Les bonbons fabriqués à l'aide de sirops de sorbitol contenant éventuellement du mannitol présentent deux inconvénients majeurs, à savoir :
— le long laps de temps nécessaire pour atteindre le durcissement complet, ce qui gêne la marche en continu des installations de fabrication,
— les phénomènes de cristallisation dus à la forte proportion de sorbitol des sirops en question.

De plus, en raison de la fluidité de la masse cuite, la fabrication de ces bonbons impose d'avoir recours à un procédé par coulée en moules, à chaud (120 °C environ), de la masse de sucre cuit sans sucre alors que, dans le cas des bonbons de sucre cuit classiques, on pouvait également procéder par découpage à partir d'un boudin dont le sucre cuit constitutif est refroidi à environ 70 °C-80 °C.

Pour améliorer la qualité de ces bonbons, les fabricants de bonbons de sucre cuit sans sucre ont proposé d'ajouter de la gomme arabique aux mélanges de sorbitol-mannitol, la gomme arabique ayant pour rôle de retarder ou d'inhiber la recristallisation du sorbitol.

L'utilisation, pour la fabrication des bonbons de sucre cuit sans sucre, d'hydrolysats d'amidon hydrogénés à la place des sirops de sorbitol a permis d'abandonner le recours à la gomme arabique, les bonbons ainsi fabriqués ne présentant pas de phénomènes de cristallisation et ne nécessitant que des durées de durcissement notablement réduites.

De plus, la fabrication des bonbons de sucre cuit sans sucre obtenus à l'aide de ces hydrolysats s'apparente étroitement à celle des bonbons de sucre cuit classiques, rendant ainsi possibles tant le formage par coulée dans des moules que le formage par découpage d'un boudin.

Les premiers hydrolysats d'amidon hydrogénés qui avaient été proposés dans la pratique étaient ceux obtenus à partir d'hydrolysats d'amidon d'un dextrose-équivalent (DE) de 30 à 40.

Les bonbons obtenus à partir de ces hydrolysats présentent effectivement un état amorphe total, sont insensibles à la cristallisation sans qu'il soit nécessaire d'avoir recours à des additions de gomme arabique et conservent donc toujours un aspect vitreux.

Ils ne sont toutefois pas dépourvus d'inconvénients. En effet, d'une part, ils sont peu sucrants, nécessitant donc le recours à des édulcorants artificiels tels que les saccharinates ou les cyclamates ou l'aspartame et, d'autre part, font preuve d'un caractère cariogène non négligeable.

Le premier de ces inconvénients a pu être éliminé par le recours à des hydrolysats d'amidon hydrogénés obtenus à partir d'hydrolysats d'amidon d'un DE plus élevé, compris entre 42 et 60.

Le deuxième a été plus récemment éliminé grâce à l'utilisation d'hydrolysats d'amidon hydrogénés comportant de plus une proportion inférieure à 3 %, de préférence inférieure à 1,5 %, de polyols de degré de polymérisation (ou DP) supérieur à 20.

Les bonbons de sucre cuit sans sucre à base de ces hydrolysats d'amidon hydrogénés ne présentent donc plus les inconvénients des bonbons de sucre cuit sans sucre à base des hydrolysats antérieurs.

D'autres inconvénients s'attachent toutefois à l'utilisation d'hydrolysats d'amidon hydrogénés obtenus par hydrogénation d'hydrolysats d'amidon présentant un DE de 42 à 60.

Le premier de ces inconvénients réside en un phénomène d'écoulement ou de fluage dont la matière constitutive du bonbon est le siège, ce phénomène, qui est assez lent à 20 °C mais qui s'accélère avec l'élévation de température, se traduisant à la longue par une déformation des bonbons, préjudiciable à leur commercialisation.

Le second inconvénient réside dans le caractère hygroscopique non négligeable de ces bonbons, dû au fait que les produits de confiserie à base de ces hydrolysats d'amidon hydrogénés doivent être amenés à une teneur en eau inférieure à 2 %, de préférence inférieure à environ 1 %, ce qui entraîne une tendance à la reprise d'eau au stockage.

Le phénomène de fluage peut être fortement atténué en abaissant la teneur en humidité résiduelle du bonbon à une valeur inférieure à environ 1 %, mais cet abaissement est très difficile à réaliser au stade industriel et entraîne de toute façon une aggravation très sensible du caractère hygroscopique du bonbon, celui-ci présentant de ce fait une plus forte tendance à coller au papier d'emballage.

Pour fixer les idées, on signale que l'humidité ou teneur en eau des bonbons de sucre cuit est déterminée, dans le cadre des mesures effectuées en rapport avec la présente invention, par la méthode dite de Karl FISHER.

Le document US-A-4 238 510 décrit des compositions d'enrobage sans sucre applicables sur des bonbons de « sucre cuit » (hard candies), ainsi que des bonbons de ce type, à base d'hydrolysat d'amidon hydrogéné, tels que ceux décrits dans le document US-E-26 959, ayant un équivalent dextrose (DE) compris entre 20 et 60 et contenant 4-20 % de sorbitol et 20-65 % de maltitol. Les compositions d'enrobage peuvent contenir un liant tel que la gomme arabique et un agent filmogène tel que la carboxyméthylcellulose.

Le document GB-A-2 053 651 décrit des chewing-gum sans sucre à base de gomme et d'hydrolysat d'amidon hydrogéné correspondant à ceux mentionnés dans la présente demande. Dans le cas des chewing-gum fourrés, l'intérieur peut contenir les mêmes éléments, ainsi que des épaississants tels que la CMC, la pectine, les alginates.

Le but de l'invention était surtout de proposer une solution permettant de remédier simultanément aux deux inconvénients mentionnés plus haut alors que, jusqu'à présent, l'atténuation de l'un se traduisait par l'amplification de l'autre, le technicien ayant donc été réduit jusqu'à présent à se satisfaire d'un compromis entre les deux.

Or, la Société Demanderesse a eu le mérite d'avoir trouvé, à l'issue d'un très grand nombre d'essais, que les deux inconvénients en question pouvaient effectivement être atténués sinon éliminés en même temps par l'incorporation à l'hydrolysat d'amidon hydrogéné constitutif du bonbon de sucre cuit sans sucre d'une quantité efficace de gomme arabique ou de carboxyméthylcellulose ou CMC, ce qui était d'autant plus inattendu que le remplacement des mélanges de sorbitol et de mannitol par les hydrolysats d'amidon hydrogénés avait précisément permis la suppression du recours à l'utilisation de gomme arabique antérieurement nécessaire comme agent de lutte contre la durée excessive du durcissement et contre la cristallisation ; cette suppression avait été considérée comme constituant un avantage déterminant.

Il s'ensuit que le bonbon de type sucre cuit sans sucre selon l'invention est caractérisé par le fait qu'il comporte,

— d'une part, à titre de sucre cuit sans sucre, un hydrolysat d'amidon hydrogéné préparé à partir d'un hydrolysat d'amidon ayant un DE de 42 à 60, de préférence compris entre 45 et 60 et, plus préférentiellement encore, entre 45 et 55 et présentant par ailleurs, les teneurs étant exprimées par rapport à la matière sèche de l'hydrolysat :

une teneur en sorbitol de 0,1 à 19 %, de préférence de 0,2 à 17 %,

une teneur en maltitol de 35 à 80 %, de préférence de 35 à 65 et, plus préférentiellement encore, de 40 à 58 %,

le complément à 100 étant constitué par des polyols de degré de polymérisation (DP) supérieur à 2, et

— d'autre part, une quantité de gomme arabique comprise entre 1 % et 8 % en poids par rapport au produit fini, de préférence entre 2 % et 6 % en poids, et/ou une quantité de CMC comprise entre 0,2 et 2 % en poids par rapport au produit fini, de préférence entre 0,3 et 1,2 %.

Plus préférentiellement encore, les susdits HAH sont obtenus à partir d'hydrolysats d'amidon présentant une teneur inférieure à 3 %, plus particulièrement inférieure à 1,5 %, en produits de DP supérieur à 20.

Un avantage inhérent à l'invention réside en effet dans le fait que la présence de la gomme arabique ou de la CMC ne vient pas contrecarrer les propriétés non cariogènes de ces derniers hydrolysats d'amidon hydrogénés.

Il peut être avantageux, dans certains cas, d'incorporer à l'hydrolysat d'amidon hydrogéné constitutif du bonbon de sucre cuit sans sucre selon l'invention, une quantité de mannitol pouvant aller jusqu'à 10 % en poids mais généralement comprise entre 1 et 8 % en poids de la masse totale du bonbon.

Cette incorporation permet en effet de diminuer encore la tendance du bonbon fini à la reprise d'eau, donc sa propension, déjà fortement réduite, à être collant, et elle est rendue possible par la présence de la gomme arabique et/ou de la CMC.

Le fait que le bonbon de sucre cuit sans sucre selon l'invention puisse présenter une teneur finale en eau supérieure à 1 %, notamment de 1 à 3 %, rendue possible par la présence de la gomme arabique ou de la CMC dans la masse soumise à la cuisson déshydratante, permet généralement de conduire la déshydratation à une température inférieure à celle normalement nécessaire en l'absence de ces produits prévus conformément à l'invention ; cet avantage peut présenter des répercussions pratiques importantes sur la fabrication.

Dans le cas de l'incorporation de gomme arabique, la température de cuisson peut en effet, dans la pratique, être choisie inférieure d'environ 5 à 15 °C par rapport aux températures nécessaires antérieurement pour préparer les bonbons de sucre cuit sans sucre à base d'hydrolysats d'amidon hydrogénés.

Cet abaissement de la température de cuisson, pour faible qu'il puisse paraître, est extrêmement intéressant car il rend possible la fabrication des bonbons avec des pressions de vapeur d'eau de l'ordre de 8 bars au lieu des 10 bars qui étaient nécessaires aux températures antérieurement utilisées et qui étaient de l'ordre de 160 à 170 °C ; en d'autres termes, il rend inutile d'avoir recours à des installations spécialement adaptées ; au contraire, les installations classiques utilisées dans la fabrication des bonbons de sucre cuit restent utilisables.

Il s'ensuit que, selon l'invention, pour préparer les bonbons conformes à l'invention, successivement :

— on incorpore à l'hydrolysat d'amidon hydrogéné, outre les additifs classiques, une proportion suffisante de gomme arabique et/ou de CMC, et éventuellement jusqu'à 10 % en poids de mannitol,

— on porte le mélange ainsi obtenu à une température supérieure à 140 °C,

— on maintient cette température sous un vide d'au moins 700 mm Hg jusqu'à ce que la teneur en humidité du mélange soit amenée à une valeur inférieure à environ 3 % en poids, notamment de 3 à environ 1 % en poids.

— on coule la masse ainsi obtenue dans des moules ou, plus préférentiellement, on en forme un boudin à partir duquel on découpe les bonbons,

— on emballe les produits de confiserie ainsi obtenus après formage et refroidissement.

On décrit ci-après, dans le cadre des exemples, les essais effectués au stade du laboratoire et au stade pilote et qui ont permis à la Demanderesse de réaliser l'invention.

## Exemple 1

Par un premier ensemble d'essais, on a réalisé une sélection parmi des dizaines de produits épaississants choisis dans le groupe comprenant :

— des extraits d'algues : carraghénanes, agar-agar,

— des gommes d'origine végétale : guar, caroube, gomme adragante, gomme arabique,

— des produits élaborés par des microorganismes : xanthane et dextran,

— des produits de synthèse : carboxyméthylcellulose (ou CMC), polyvinylpyrrolidone (ou PVP), carboxyméthylamidon

qui ont été mis en œuvre dans la fabrication de bonbons dont la matière constitutive était un hydrolysat d'amidon hydrogéné (HAH 1) présentant la composition suivante (pourcentages exprimés sur la matière sèche) et obtenu par hydrogénation d'un hydrolysat d'amidon présentant un DE de 48,2 :

| | |
|---|---|
| DP 1 | 7,0 |
| DP 2 | 51,5 |
| DP 3 | 18,0 |
| DP 4 à DP 10 | 15,5 |
| DP 10 à DP 20 | 6,7 |
| DP > 20 | 1,3. |

Le mode opératoire retenu pour ces premiers essais comportait :

— le mélange du produit et de l'hydrolysat,

— la cuisson du mélange en récipient de cuivre sur plaque électrique jusqu'à la température de 180 °C avec agitation fréquente,

— la coulée sur marbre froid de la masse cuite une fois la température de 180 °C atteinte,

— la découpe de la masse refroidie vers 60-80 °C en bonbons de 15 × 15 mm,

— l'emballage des bonbons.

Les tests pratiqués sur chacun des bonbons ainsi fabriqués et qui avaient pour but d'évaluer les qualités de tenue au fluage et d'hygroscopicité étaient les suivants :

### 1) Test de tenue au fluage

Les bonbons (non développés) ont été placés dans un dessiccateur contenant une solution saturée de chlorure de lithium assurant dans le dessiccateur une humidité relative comprise entre 10 et 15 %.

Pour accélérer le phénomène, le dessiccateur a été gardé à exactement 50 °C dans une étuve fermée.

L'écoulement ou fluage ou « cold flow » était apprécié dans le temps et noté mauvais, moyen ou bon suivant la surface occupée par le bonbon après une semaine de test.

(bon : surface occupée identique au début et à la fin du test)

(mauvais : surface au moins doublée à la fin du test).

### 2) Test d'hygroscopicité

Des bonbons (non développés) de poids connu ont été placés à 20 °C dans un dessiccateur contenant une solution saturée de nitrite de sodium assurant dans le dessiccateur une humidité relative de 66 %. Le poids des bonbons a été contrôlé quotidiennement pendant 6 jours.

Les résultats obtenus pour les produits épaississants employés à diverses concentrations (exprimées en pourcentages par rapport à la matière sèche de l'hydrolysat) sont rassemblés dans le tableau I.

Le résultat est considéré comme :

— bon, si le bonbon a repris moins de 2,5 % d'eau après 6 jours,

— mauvais, si le bonbon a repris plus de 3 % d'eau après 6 jours.

Les résultats enregistrés tant pour le test de tenue au fluage que pour le test d'hygroscopicité sont réunis dans le tableau I ci-après :

(Voir Tableau I pages 5 et s.)

## Tableau I

| Familles de produits testés | Nature du produit et quantité mise en oeuvre (% en poids par rapport à la matière sèche de l'hydrolysat) | | Hygroscopicité | Fluage |
|---|---|---|---|---|
| Extraits d'algues | Carraghénane Kappa connu sous la marque "GENULACTA CSP"® et commercialisé par HERCULES | 1 °/$_{00}$ 2 °/$_{00}$ 3 °/$_{00}$ | bon moyen bon | moyen moyen moyen |
| | Carraghénane Kappa connu sous la marque "GENUGEL TOR-2"® et commercialisé par HERCULES | 5 °/$_{00}$ | mauvais | mauvais |
| | Carraghénane de mélange gélifiant à chaud connu sous la marque "GELOGEN 4"® et commercialisé par CECA | 5 °/$_{00}$ | mauvais | mauvais |
| | Carraghénane gélifiant connu sous la marque "SATIAGEL SIA"® et commercialisé par CECA | 5 °/$_{00}$ | bon | moyen |
| | Carraghénane épaississant connu sous la marque "SATIAGUM E"® et commercialisé par CECA | 5 °/$_{00}$ | moyen | moyen |
| | Carraghénane épaississant connu sous la marque "AUBYGEL MR 50"® et commercialisé par CECA | 5 °/$_{00}$ | mauvais | moyen |
| | Carraghénane épaississant connu sous la marque "AUBYGUM X2"® et commercialisé par CECA | 5 °/$_{00}$ | mauvais | moyen |
| | Carraghénane épaississant connu sous la marque "AUBYGUM DM"® et commercialisé par CECA | 5 °/$_{00}$ 7 °/$_{00}$ | mauvais mauvais | mauvais mauvais |
| | Agar-agar | 5 °/$_{00}$ | moyen | moyen |

Tableau I (Suite)

| Familles de produits testés | Nature du produit et quantité mise en oeuvre (% en poids par rapport à la matière sèche de l'hydrolysat) | | Hygroscopicité | Fluage |
|---|---|---|---|---|
| Gommes d'origine végétale | Guar | 2 °/₀₀ | moyen | mauvais |
| | | 3 °/₀₀ | moyen | mauvais |
| | | 5 °/₀₀ | moyen | mauvais |
| | Caroube | 5 °/₀₀ | moyen | moyen |
| | Gomme adragante | 5 °/₀₀ | moyen | bon |
| | Gomme arabique | 1,5 % | moyen | moyen |
| | | 3 % | bon | bon |
| | | 4 % | bon | bon |
| | | 5 % | bon | bon |
| Produits provenant de microorganismes | Xanthane | 0,3 °/₀₀ | moyen | moyen |
| | | 0,5 °/₀₀ | difficile à cuire | |
| | Dextran 70 000 | 5 °/₀₀ | mauvais | moyen |
| | | 7,5 °/₀₀ | mauvais | bon |
| | | 10 °/₀₀ | mauvais | bon |
| | | 12,5 °/₀₀ | mauvais | bon |
| | Dextran 5 000 000 | 0,5 °/₀₀ | mauvais | mauvais |
| | | 1 °/₀₀ | mauvais | mauvais |
| | | 2 °/₀₀ | moyen | bon |
| | Dextran 200 000 – 300 000 | 1 °/₀₀ | mauvais | bon |
| | | 2 °/₀₀ | mauvais | bon |

0 094 292

Tableau I (Suite)

| Familles de produits testés | Nature du produit et quantité mise en oeuvre (% en poids par rapport à la matière sèche de l'hydrolysat) | | Hygroscopicité | Fluage |
|---|---|---|---|---|
| Produits de synthèse | PVP (polyvinylpyrrolidone) | i m p o s s i b l e | t r o p  d e  m o u s s e | |
| | Carboxyméthylcellulose commercialisée sous la désignation "CMC RL 160" (degré de substitution D.S. = 0,7 - faible viscosité) par HERCULES | 5 °/₀₀ | moyen | bon |
| | Carboxyméthylcellulose commercialisée sous la désignation "CMC 9 M 65 F" (degré de substitution D.S. = 0,9 - viscosité moyenne) par HERCULES | 5 °/₀₀ 4 °/₀₀ | bon moyen | bon bon |
| | Carboxyméthylcellulose commercialisée sous la désignation "CMC 7 M F" (degré de substitution D.S. = 0,7 - viscosité moyenne - qualité alimentaire) par HERCULES | 5 °/₀₀ | bon | bon |
| | Carboxyméthylamidon (degré de substitution D.S. = 0,17) | 3 °/₀₀ 5 °/₀₀ | moyen | moyen |

0 094 292

**0 094 292**

Il résulte des résultats réunis dans le tableau I que la carboxyméthylcellulose utilisée à 5 % et la gomme arabique utilisée à 3 %, 4 % et 5 % se comportent bien aux tests d'hygroscopicité et de fluage.

Afin de mieux évaluer leur action, ces produits ont été retenus pour une deuxième série d'essais dans laquelle les conditions de cuisson et d'appréciation ont été légèrement modifiées.

Dans ces essais, les produits suivants sont comparés :
— hydrolysat d'amidon hydrogéné (HAH 1) défini plus haut (témoin)
— HAH 1 additionné de gomme arabique (ou GA) à 3 %
— HAH 1 additionné de carboxyméthylcellulose (ou CMC) 7 MF à 0,5 %
— HAH 1 additionné de carboxyméthylcellulose (ou CMC) 7 MF à 0,7 %.

Dans cette deuxième série d'essais, la cuisson n'est plus menée jusqu'à une température donnée mais jusqu'à un poids donné, c'est-à-dire jusqu'à une teneur en eau résiduelle définie.

Pour ce faire, la plaque électrique et le récipient de cuisson sont placés sur une balance et l'évolution du poids de la masse cuite (augmentation de la matière sèche) se lit instantanément au fur et à mesure de l'évaporation de l'eau.

Pour chacune des compositions citées ci-dessus, des bonbons ont été cuits de telle façon que les teneurs en eau résiduelle soient de 1 %, 1,5 % et 2 %.

La température finale de cuisson correspondant à la teneur désirée en humidité résiduelle a été relevée pour chaque essai.

Les tests et mesures décrits ci-après sont appliqués à chacun des produits d'essai. Les résultats sont réunis dans le tableau II.

### 1) Test de collage

Les échantillons sont maintenus dans une atmosppère à 66 % d'humidité relative pendant 60 heures ; la reprise en eau est alors comprise entre 0,5 et 1 %.

L'appareil utilisé pour caractériser le collage peut être celui connu sous la marque « INSTRON 1122 ».

Un morceau parallélépipédique de sucre cuit est placé entre les mâchoires de l'étau de mesure comporté par cet appareil de façon que la face de ce morceau dirigée vers le haut soit disposée horizontalement. Une pastille supportant un poids de 330 g est appliquée sur la face du bonbon, dirigée vers le haut et est laissée en place sous l'effet du poids pendant 15 secondes.

La force (exprimée en Newton) nécessaire pour décoller la pastille est alors mesurée.

Plus le collage est important, plus cette force est élevée.

### 2) Test d'hygroscopicité

La mesure est identique à celle décrite à propos des essais précédents.

Dans le tableau II sont notées les reprises en poids moyennes pour chaque type de bonbons après 1, 2, 3 et 6 jours ainsi que la déformation du bonbon après 6 jours, à savoir :
— déformation très importante : noté 10 (écoulement)
— pas de déformation : noté 0.

### 3) Test de tenue au fluage

Ce test est identique à celui décrit plus haut ; l'écoulement est apprécié par des notes allant de 0 à 10, 0 représentant un écoulement nul et 10 un écoulement très important.

Comparativement aux résultats obtenus avec les bonbons à base d'hydrolysat d'amidon hydrogéné (HAH 1) seul, l'utilisation de gomme arabique ou de CMC conduit pour la fabrication des bonbons :
— à une diminution de la température de cuisson (résultats figurant sur le tableau II) pour une teneur en eau résiduelle identique, surtout marquée pour 1 % d'eau ; cette température est de 192 °C pour le bonbon à base d'HAH 1 seul, de 185 °C en présence de gomme arabique, de 188 °C en présence de CMC ;
— à une diminution de l'hygroscopicité (reprise en eau plus faible) accompagnée d'une moindre déformation du bonbon à la fin du test d'hygroscopicité ;
— à une meilleure tenue au fluage.

Comparativement à la gomme arabique, la CMC donne des bonbons plus résistants au fluage mais légèrement plus collants dans les conditions du test de collage défini précédemment.

(Voir Tableau II page 9)

8

Tableau II

| | | | Témoin | | | GA à 3 % | | | CMC à 0,5 % | | | CMC à 0,7 % | | |
|---|---|---|---|---|---|---|---|---|---|---|---|---|---|---|
| Teneur finale en eau du bonbon | | | 1 | 1,5 | 2 | 1 | 1,5 | 2 | 1 | 1,5 | 2 | 1 | 1,5 | 2 |
| Température de cuisson en °C | | | 192 | 178 | 165 | 185 | 175 | 166 | 188 | 178 | 167 | 188 | 178 | 167 |
| Collage : Force en N | | | 5,6 | 5,4 | 5,6 | 5,3 | 4,9 | 4,8 | 6,8 | 6,9 | 6,8 | 6,4 | 5,1 | 5,6 |
| Hygros-copicité | Reprise en poids en % après | 1 jour | 0,83 | 0,67 | 0,67 | 0,62 | 0,58 | 0,57 | 0,59 | 0,79 | 0,77 | 0,79 | 0,79 | 0,71 |
| | | 2 jours | 1,35 | 1,14 | 1,15 | 1,02 | 0,96 | 0,95 | 0,98 | 1,15 | 1,12 | 1,14 | 1,18 | 1,04 |
| | | 3 jours | 1,77 | 1,49 | 1,53 | 1,33 | 1,24 | 1,24 | 1,26 | 1,34 | 1,32 | 1,34 | 1,39 | 1,21 |
| | | 6 jours | 3,41 | 3,00 | 3,10 | 2,64 | 2,50 | 2,47 | 2,39 | 2,37 | 2,25 | 2,34 | 2,40 | 2,37 |
| | Déformation après 6 jours | | 9 | 9 | 10 | 8 | 7 | 7 | 4 | 5 | 6 | 5 | 4 | 4 |
| Fluage | après 6 jours de test | | 4 | 7 | 10 | 2 | 5 | 7 | 1 | 3 | 7 | 1 | 3,5 | 4 |

0 094 292

Il est possible, à partir des résultats du tableau II, de résumer l'intérêt des GA et CMC dans l'amélioration des bonbons à base d'hydrolysat d'amidon hydrogéné en comparant l'hygroscopicité de bonbons (avec et sans GA et/ou CMC) présentant une tenue au test de fluage approximativement similaire.

Les valeurs correspondantes sont réunies dans le tableau III ci-après.

Tableau III

|  | TEMOIN | HAH 1 + GA à 3 % | HAH 1 + CMC à 0,5 % | HAH 1 + CMC à 0,7 % |
|---|---|---|---|---|
| Fluage | 4 | 5 | 3 | 3 |
| Teneur en eau en % | 1 | 1,5 | 1,5 | 1,5 |
| Température de cuisson (°C) | 192 | 175 | 178 | 178 |
| Hygroscopicité après 6 jours (%) | 3,41 | 2,50 | 2,37 | 2,40 |
| Déformation après test hygroscopicité | 9 | 7 | 5 | 4 |

Il apparaît, à l'examen de ce tableau, que la présence d'un faible pourcentage de gomme arabique ou de CMC permet donc de diminuer la température de cuisson, par là même de diminuer fortement l'hygroscopicité du produit (jusqu'à 30 % dans ces essais) et de réduire la déformation liée à une absorption d'eau.

Exemple 2

Les essais de laboratoire ont été complétés par des essais similaires sur du matériel de confiserie classique.

Les étapes opératoires suivantes :
— chargement d'un cuiseur de marque « OTTO HÄNSEL » avec 30 kg de l'HAH 1 défini à l'exemple 1, à 75 % de matières sèches,
— dispersion éventuelle des gommes ou autres produits, directement dans le cuiseur, sous agitation,
— cuisson en 10 à 15 minutes, puis mise sous vide (700 mm Hg) pendant 2 mn 30 secondes,
— refroidissement sur table froide,
— passage sur boudineuse vers 80 °C,
— chaîne de refroidissement — sortie de chaîne vers 50-54 °C,
— emballage sur emballeuse automatique,
ont été mises en œuvre successivement dans les conditions indiquées ci-après :
— HAH 1 seul à 160 °C et 150 °C (essais 1 et 2)
— mélange HAH 1 et 3,5 % de gomme arabique à 150 °C et 140 °C (essais 3 et 4)
— mélange HAH 1 et 0,8 % puis 0,4 % d'agar-agar à 140 °C (essais 5 et 6)
— mélange HAH 1 et 0,8 % de carraghénane (marque « SATIAGEL MR ») à 140 °C (essai 7).

On a réuni dans le tableau IV ci-après, pour chaque essai, les observations relevées au cours de la fabrication et les résultats des mesures de la teneur en eau résiduelle (méthode Karl Fisher), du test d'hygroscopicité et du test de fluage ou « cold-flow » décrits plus haut.

**Tableau IV**

| N° Essai | HAH à 75 % m.s. (kg) | Gomme arabique poudre (kg) | Agar-agar (kg) | SATIAGEL MR (kg) | Température de cuisson °C | Observations | H$_2$O % | Hygroscopicité | | Fluage 10 très mauvais 1 très bon |
|---|---|---|---|---|---|---|---|---|---|---|
| | | | | | | | | Après 7 jours | Après 15 jours | |
| 1 | 30 | – | – | – | 160 | | 1,43 | + 2,87 | + 5,57 | 3 |
| 2 | 30 | – | – | – | 150 | Très fluide, se déforme facilement au sortir du tunnel de refroidissement | 2,11 | + 2,68 | + 5,29 | 8 |
| 3 | 30 | 0,79 | – | – | 150 | Assez visqueux | 1,37 | + 2,21 | + 4,10 | 1 |
| 4 | 30 | 0,79 | – | – | 140 | Coloration faible Travail facile | 2,44 | + 2,01 | + 3,68 | 7 |
| 5 | 30 | ÷ | 0,18 | – | 140 | Texture très élastique, très tirante, ne passe pas sur machine | 2,08 | + 2,36 | + 4,51 | 7 |
| 6 | 30 | – | 0,09 | – | 140 | Très élastique, très tirant, rétraction importante, ne passe pas sur machine | 1,98 | + 2,65 | + 5,20 | 8 |
| 7 | 30 | – | – | 0,18 | 140 | Trop élastique, très coloré, ne passe pas sur machine | – | – | – | – |

Tableau V

| Essai n° | % de mannitol | Déformation après le test d'hygrosco-picité | Appréciation de la recris-tallisation de surface | Appréciation du fluage |
|---|---|---|---|---|
| 1 | 0 | 9 | aucune | 4 |
| 2 | 5 | 5 | + | 10 |
| 3 | 7,5 | 0 | +++ | 10 |
| 4 | 10 | 0 | +++ | 10 |

Signification des symboles : + faible, ++ moyenne, +++ forte.

Il résulte des valeurs réunies dans le tableau V que les bonbons comportant du mannitol et qui sont soumis au test d'hygroscopicité présentent, après une légère reprise en eau, une fine couche cristallisée de surface qui freine ou même interrompt toute absorption d'eau et donc assure la conservation du produit.

Il apparaît cependant, d'après le tableau V, que cette utilisation de mannitol seul se traduit également par une augmentation très importante du phénomène de fluage, ce qui rend l'amélioration de la conservation des bonbons par le mannitol aléatoire.

La mise en œuvre conjointe de gomme arabique et/ou de CMC permet, par contre, d'empêcher le fluage du bonbon tout en conservant l'effet bénéfique du mannitol sur la stabilité du produit, ainsi qu'il apparaît des essais dont les résultats sont réunis dans le tableau VI ; ces essais ont été réalisés avec 7,5 % de mannitol et des quantités croissantes (3 %, 4 % et enfin 5 %) de gomme arabique, les températures de cuisson étant de 160, 170 et 180 °C.

Tableau VI

| Composition du bonbon | | Tempé-rature cuisson (°C) | Déformation après le test d'hygrosco-picité | Appréciation de la recris-tallisation de surface | Appréciation du fluage |
|---|---|---|---|---|---|
| Taux de mannitol | Taux de gomme arabique | | | | |
| 0 | 0 | 180 | 9 | aucune | 4 |
| 7,5 | 3 | 160 | 0 | +++ | 10 |
| 7,5 | 3 | 170 | 0 | +++ | 8 |
| 7,5 | 3 | 180 | 0 | +++ | 2 |
| 7,5 | 4 | 160 | 0 | +++ | 8 |
| 7,5 | 4 | 170 | 0 | +++ | 8 |
| 7,5 | 4 | 180 | 0 | ++ | 1 |
| 7,5 | 5 | 160 | 0 | +++ | 7 |
| 7,5 | 5 | 170 | 0 | ++ | 5 |
| 7,5 | 5 | 180 | 0 | ++ | 0 |

L'incorporation de gomme arabique évite donc toute déformation du produit au test d'hygroscopicité et assure, pour des températures de cuisson suffisantes, une bonne tenue au fluage du bonbon composé d'un mélange d'hydrolysat d'amidon hydrogéné et de mannitol.

On peut ainsi combiner une diminution de l'hygroscopicité du bonbon « sans sucre » par l'utilisation du mannitol et une amélioration de la tenue au fluage par l'incorporation de gomme arabique, ce qui conduit globalement à une amélioration importante de la stabilité à la conservation des bonbons à base d'hydrolysat d'amidon hydrogéné.

A l'examen du tableau IV, on constate que la température de cuisson avant application du vide pour un bonbon à base d'HAH 1 seul ne peut être inférieure à 150 °C (essai n° 2), la tenue au fluage se révélant déjà médiocre pour cet essai.

On constate, d'autre part, que les bonbons de l'essai n° 1 présentent une bonne tenue au fluage, mais une hygroscopicité importante.

Les bonbons comportant de la gomme arabique et cuits à 140 °C (essai n° 4) sont peu hygroscopiques mais sont également médiocres au test de fluage. A 150 °C, la gomme arabique (essai n° 3) apporte une tenue suffisante au bonbon tout en diminuant son hygroscopicité.

Les résultats relevés en rapport avec les essais de laboratoire sont donc confirmés par ces essais industriels. Grâce à l'addition de gomme arabique, une température de cuisson diminuée de 10 °C permet l'obtention de bonbons à base d'hydrolysat d'amidon hydrogéné présentant une tenue au fluage meilleure et une hygroscopicité réduite, comparativement à un témoin ne contenant pas de gomme arabique.

La mise en œuvre des autres hydrocolloïdes testés change dans certains cas la texture de la masse cuite.

Ainsi, les bonbons contenant le carraghénane et l'agar-agar n'ont pu être fabriqués normalement car la texture élastique conférée par ces produits gêne le travail de la rouleuse et de l'emballeuse.

La gomme arabique, ne présentant pas de propriétés rhéologiques défavorables, donne donc pleine satisfaction dans ces fabrications.

## Exemple 3

Cet exemple illustre l'utilisation de mannitol en association avec la gomme arabique et/ou la CMC pour la fabrication de bonbons à base d'hydrolysats d'amidon hydrogénés.

L'utilisation de mannitol pouvait en effet se révéler intéressante pour limiter l'hygroscopicité de bonbons, dans le sens où ce produit pouvait amener, après une légère reprise en eau du bonbon, une fine recristallisation en surface, formant ainsi une « barrière » qui a pour résultat de freiner le transfert d'humidité.

Toutefois et ainsi que les essais suivants vont le montrer, la seule incorporation de mannitol pour la fabrication de bonbons à base d'hydrolysats d'amidon hydrogénés présentant un DE avant hydrogénation de 42 à 60 n'est pas avantageuse car elle accentue en fait notablement la tendance au fluage des bonbons.

Dans cet exemple, les essais ont été réalisés sur un hydrolysat d'amidon hydrogéné (HAH 2) présentant la composition suivante (pourcentages exprimés sur la matière sèche) :

| | |
|---|---|
| DP 1 | 3,6 |
| DP 2 | 54,0 |
| DP 3 | 18,1 |
| DP 4 à DP 10 | 10,7 |
| DP 10 à DP 20 | 8,7 |
| DP > 20 | 4,9. |

Avant hydrogénation, cet hydrolysat présentait un DE voisin de 47,6.

La méthode de préparation des bonbons était identique à celle décrite dans l'exemple 1.

On a réuni dans le tableau V les résultats enregistrés du point de vue de la déformation après le test d'hygroscopicité, du point de vue de l'appréciation de la recristallisation en surface et du point de vue du test de fluage, pour des bonbons fabriqués d'une part avec l'hydrolysat d'amidon hydrogéné (HAH 2) seul, d'autre part avec des mélanges d'HAH 2 et de respectivement 5, 7,5 et 10 % de mannitol (les pourcentages étant exprimés par rapport à la matière sèche de l'hydrolysat), la température de cuisson étant de 180 °C.

### Revendications

1. Bonbon de type sucre cuit sans sucre, caractérisé par le fait qu'il comporte,
— d'une part, à titre de sucre cuit sans sucre, un hydrolysat d'amidon hydrogéné préparé à partir d'un hydrolysat d'amidon ayant un DE de 42 à 60, de préférence compris entre 45 et 60 et, plus préférentiellement encore, entre 45 et 55 et présentant par ailleurs, les teneurs étant exprimées par rapport à la matière sèche de l'hydrolysat :
une teneur en sorbitol de 0,1 à 19 %, de préférence de 0,2 à 17 %,
une teneur en maltitol de 35 à 80 %, de préférence de 35 à 65 et, plus préférentiellement encore, de 40 à 58 %,
le complément à 100 étant constitué par des polyols de degré de polymérisation (DP) supérieur à 2, et
— d'autre part, une quantité de gomme arabique comprise entre 1 % et 8 % en poids par rapport au produit fini, de préférence entre 2 % et 6 % en poids, et/ou une quantité de CMC comprise entre 0,2 et 2 % en poids par rapport au produit fini, de préférence entre 0,3 et 1,2 %.

2. Bonbon de type sucre cuit sans sucre selon la revendication 1, caractérisé par le fait que l'hydrolysat qu'il comporte à titre de sucre cuit sans sucre présente une teneur inférieure à 3 %, plus particulièrement inférieure à 1,5 %, en produits de DP supérieur à 20.

3. Bonbon de type sucre cuit sans sucre selon l'une des revendications 1 et 2, caractérisé par le fait qu'il comporte jusqu'à 10 % en poids de mannitol par rapport à la masse totale de bonbon.

4. Bonbon de type sucre cuit sans sucre selon la revendication 3, caractérisé par le fait qu'il comporte une quantité de mannitol comprise entre 1 et 8 % de la masse totale du bonbon.

5. Procédé de préparation de bonbons de type sucre cuit sans sucre selon l'une des revendications 1 à 4, caractérisé par le fait que successivement :

— on incorpore à l'hydrolysat d'amidon hydrogéné, outre les additifs classiques, une proportion suffisante de gomme arabique et/ou de CMC, et éventuellement jusqu'à 10 % en poids de mannitol,

— on porte le mélange ainsi obtenu à une température supérieure à 140 °C,

— on maintient cette température sous un vide d'au moins 700 mm Hg jusqu'à ce que la teneur en humidité du mélange soit amenée à une valeur inférieure à environ 3 % en poids, notamment de 3 à environ 1 % en poids,

— on emballe les produits de confiserie ainsi obtenus après formage et refroidissement.


## Claims

1. Sugarless hard candy characterized by the fact that it comprises,

— on the one hand, as sugarless high boiled sugar, a hydrogenated starch hydrolysate prepared from a starch hydrolysate having a DE of 42 to 60, preferably comprised between 45 and 60 and, more preferably still, between 45 to 55 and having furthermore, expressed with respect to the dry matter of the hydrolysate :

a sorbitol content of 0.1 to 19 %, preferably from 0.2 to 17 %,

a maltitol content of 35 to 80 %, preferably from 35 to 65 and, more preferably still, from 40 to 58 %, the complement to 100 being constituted by polyols of degree of polymerisation (DP) higher than 2, and

— on the other hand, an amount of gum arabic between 1 % and 8 % by weight with respect to the finished product, preferably between 2 % and 6 % by weight, and/or an amount of CMC between 0.2 and 2 % by weight with respect to the finished product, preferably between 0.3 and 1.2 %.

2. Sugarless hard candy according to claim 1, characterized by the fact that the hydrogenated starch hydrolysate which is comprised as sugarless high boiled sugar, has a content lower than 3 %, more particularly 1.5 %, of products of DP higher than 20.

3. Sugarless hard candy according to one of claims 1 and 2, characterized by the fact that it comprises up to 10 % by weight of mannitol with respect to the total mass of the candy.

4. Sugarless hard candy according to claim 3, characterized by the fact that it comprises a quantity of mannitol between 1 and 8 % by weight of the total mass of the candy.

5. Process for the preparation of sugarless hard candy according to one of claims 1 to 4, characterized by the fact that it comprises the successive steps :

— of incorporating in the hydrogenated starch hydrolysate, besides the conventional additives, of a sufficient proportion of gum arabic and/or of CMC, and if necessary of up to 10 % by weight of mannitol,

— of heating the mixture so obtained to a temperature higher than 140 °C,

— of maintaining this temperature under a vacuum of at least 700 mm Hg until the moisture content of the mixture is brought to a value below about 3 % by weight, particularly of 3 to about 1 % by weight,

— of wrapping the candies thus obtained after shaping and cooling.


## Patentansprüche

1. Bonbon vom Typ der zuckerfreien Hartkaramellen, dadurch gekennzeichnet, daß es enthält

— einesteils als zuckerfreie Hartkaramellen, ein hydriertes Stärkehydrolysat hergestellt aus einem Stärkehydrolysat mit einem DE von 42 bis 60, vorzugsweise zwischen 45 und 60 und insbesondere zwischen 45 und 55, mit den folgenden in Bezug auf Trockensubstanz des Hydrolysats ausgedrückten Gehalten :

einem Gehalt an Sorbit von 0,1 bis 19 %, vorzugsweise 0,2 bis 17 %,

einem Gehalt an Maltit von 35 bis 80 %, vorzugsweise 35 bis 65 und insbesondere 40 bis 58 %, wobei der Rest auf 100 aus Polyolen mit einem Polymerisationsgrad (PG) von höher als 2 besteht, und

— anderenteils einen Anteil an Gummiarabikum zwischen 1 und 8 Gew.-%, bezogen auf das Endprodukt, vorzugsweise zwischen 2 und 6 Gew.-% und/oder einen Anteil an CMC zwischen 0,2 und 2 Gew.-%, bezogen auf das Endprodukt, vorzugsweise zwischen 0,3 und 1,2 %.

2. Bonbon vom Typ der zuckerfreien Hartkaramellen gemäß Anspruch 1, dadurch gekennzeichnet, daß das Hydrolysat, das es als zuckerfreie Hartkaramellen enthält, einen Gehalt von geringer als 3 %, vorzugsweise geringer als 1,5 % an Produkten mit einem PG von höher als 20 aufweist.

3. Bonbon vom Typ der zuckerfreien Hartkaramellen gemäß einem der Ansprüche 1 und 2, dadurch gekennzeichnet, daß es bis zu 10 Gew.-% Mannit bezogen auf die Gesamtmasse des Bonbons enthält.

4. Bonbon vom Typ der zuckerfreien Hartkaramellen gemäß Anspruch 3, dadurch gekennzeichnet, daß es einen Anteil an Mannit zwischen 1 und 8 % der Gesamtmasse des Bonbons enthält.

5. Verfahren zur Herstellung von Bonbons vom Typ der zuckerfreien Hartkaramellen gemäß einem der Ansprüche 1 bis 4, dadurch gekennzeichnet, daß man nacheinander

— in das hydrierte Stärkehydrolysat, außer üblichen Additiven eine ausreichende Menge Gummiarabikum und/oder CMC und gegebenenfalls bis zu 10 Gew.-% Mannit einbringt,

— das so erhaltene Gemisch auf eine Temperatur von höher als 140 °C bringt,

— diese Temperatur unter Vakuum von zumindest 700 mm Hg beibehält, bis der Feuchtigkeitsgehalt des Gemisches auf einen Wert von geringer als etwa 3 Gew.-%, insbesondere 3 bis etwa 1 Gew.-% gebracht ist, und

— die so erhaltenen Konfiserieprodukte nach der Formgebung und dem Abkühlen verpackt.